# EUROPÄISCHE PATENTSCHRIFT

(11) **EP 3 250 404 B1**
(45) Veröffentlichungstag und Bekanntmachung des Hinweises auf die Patenterteilung: **03.04.2019**
(21) Anmeldenummer: 16702679.8
(22) Anmeldetag: 25.01.2016
(51) Int. Cl.: B60J 7/02, B60J 7/043

(54) **ANTRIEBSSYSTEM FÜR EINEN BEWEGLICHEN DACHTEIL EINES DACHMODULS EINES KRAFTFAHRZEUGS**
DRIVE SYSTEM FOR A MOVABLE ROOF PART OF A ROOF MODULE OF A MOTOR VEHICLE
SYSTÈME D'ENTRAÎNEMENT POUR UNE PIÈCE DE TOIT MOBILE D'UN MODULE DE TOIT D'UN VÉHICULE AUTOMOBILE

(30) Priorität: 29.01.2015 DE 102015201587
(43) Veröffentlichungstag der Anmeldung: 06.12.2017
(73) Patentinhaber: BOS GmbH & Co. KG, 73760 Ostfildern (DE)
(72) Erfinder: HEIDAN, Michael, 70569 Stuttgart (DE); EBERST, Hartmut, 73529 Schwäbisch Gmünd (DE)
(74) Vertreter: Patentanwälte Ruff, Wilhelm, Beier, Dauster & Partner mbB
(86) Internationale Anmeldenummer: PCT/EP2016/051420
(87) Internationale Veröffentlichungsnummer: WO 2016/120193

(56) Entgegenhaltungen:
- WO-A2-2014/082920
- DE-A1-102005 007 031
- DE-A1-102010 034 566

## Beschreibung

Die Erfindung betrifft ein Antriebssystem für einen beweglichen Dachteil eines Dachmoduls eines Kraftfahrzeugs nach dem Oberbegriff des Anspruchs 1.

Ein derartiges Antriebssystem ist aus der DE 10 2010 034 566 A1 bekannt. Als Sperrglied ist eine Sperrklinke vorgesehen, die horizontal schwenkbeweglich gelagert ist.

Aus der DE 10 2005 007 031 A1 ist ein Antriebssystem für einen beweglichen Dachteil eines Dachmoduls eines Personenkraftwagens bekannt. Der bewegliche Dachteil ist an seinen gegenüberliegenden Seiten mit jeweils einem Trägerprofil verbunden, das jeweils über eine frontseitige Hubanordnung und eine rückseitige Ausstellmechanik verlagerbar ist, um den Dachteil zwischen einer Schließstellung, einer Lüftungsstellung und einer Öffnungsstellung zu verlagern, in der der Dachteil einen Dachausschnitt freigibt und über einen feststehenden Dachteil hinweg nach hinten verlagert ist. Die Ansteuerung der gegenüberliegenden Trägerprofile erfolgt synchron über paarweise identische frontseitige Hubanordnungen und rückseitige Ausstellmechaniken, die in gegenüberliegenden Führungsschienenanordnungen des Dachmoduls verlagerbar sind. Zur Aktivierung der jeweiligen Hubanordnung und der jeweiligen Ausstellmechanik weist jede der beiden gegenüberliegenden Antriebsseiten des Antriebssystems jeweils einen Antriebsschlitten auf, der über Antriebsübertragungsmittel längs der jeweiligen Führungsschienenanordnung verfahrbar ist. Die Antriebsübertragungsmittel werden synchron über eine zentrale Antriebseinheit angetrieben.

Aufgabe der Erfindung ist es, ein Antriebssystem der eingangs genannten Art zu schaffen, das mit einfachen Mitteln eine zuverlässige Steuerung des beweglichen Dachteils ermöglicht.

Diese Aufgabe wird durch die Merkmale des Anspruchs 1 gelöst. Durch die erfindungsgemäße Lösung wird der Koppelschlitten entweder ortsfest in der Führungsschienenanordnung blockiert oder durch den Antriebsschlitten mitgenommen, je nachdem, welche Steuerfunktion des Trägerprofils und damit des Dachteils jeweils durchgeführt wird. Das erfindungsgemäße Antriebssystem umfasst vorzugsweise zwei Antriebsseiten, die den gegenüberliegenden Längsseiten des beweglichen Dachteils zugeordnet sind. Jede dieser Antriebsseiten weist jeweils ein Trägerprofil auf, das mit dem beweglichen Dachteil verbunden ist. Jede Antriebsseite umfasst zudem jeweils eine frontseitige Hubanordnung und eine rückseitige Ausstellmechanik sowie eine Koppeleinrichtung, die jeweils einen Koppelschlitten umfasst, der mit jeweils einem in Hochrichtung beweglichen Sperrglied versehen ist. Unter der Hochrichtung ist eine Ausrichtung in betriebsfertig montiertem Zustand des Dachmoduls am Kraftfahrzeug zu verstehen, so dass die Hochrichtung zumindest weitgehend einer Fahrzeughochrichtung entspricht. In analoger Weise werden die Begriffe "frontseitig" und "rückseitig" als in Fahrzeuglängsrichtung vorne und hinten liegende Definitionen angesehen. Die jeweilige frontseitige Hubanordnung ist demzufolge einem vorderen Teil des jeweiligen Trägerprofils des beweglichen Dachteils zugeordnet, während die rückseitige Ausstellmechanik dazu dient, einen hinteren Teil des Trägerprofils anzuheben, abzusenken und längs zu führen. Die Beweglichkeit des Sperrglieds in Hochrichtung umfasst eine linearbewegliche Lagerung des Sperrglieds oder eine bewegliche Lagerung längs einer Kurvenbahn oder auch eine schwenkbewegliche Lagerung des Sperrglieds an dem Koppelschlitten. Die Erfindung ist vorteilhaft bei einem Dachmodul eines Personenkraftwagens vorgesehen. Erfindungsgemäß ist an dem Koppelschlitten ein Stützelement angebracht, das zwischen einer das Sperrglied in einer Raststellung sichernden Stützstellung und einer das Sperrglied für ein Absenken nach unten freigebenden Lösestellung beweglich gelagert ist. In der Raststellung des Sperrgliedes ist das Sperrglied in der Rastaussparung im Bereich der Oberseite der Führungsschienenanordnung ortsfest positioniert. Bei einem Absenken des Sperrgliedes nach unten kann das Sperrglied in die Aufnahme des Antriebschlittens eintauchen. Das bewegliche Stützelement sichert das Sperrglied in der Raststellung bzw. gibt es für eine Bewegung nach unten frei, indem das Stützelement in die Lösestellung überführt wird. Die Überführung des Stützelementes in die Lösestellung erfolgt vorzugsweise zwangsgesteuert durch eine entsprechende Bewegung des Antriebsschlittens.

In Ausgestaltung der Erfindung weist das Sperrglied auf einer Seite eine zu der Rastaussparung komplementäre Kontur und auf einer gegenüberliegenden Seite eine auf die Aufnahme im Antriebsschlitten abgestimmte Aufnahmekontur auf. Vorzugsweise ist die Rastaussparung ortsfest im Bereich einer Oberseite der Führungsschienenanordnung positioniert. Bei einer Bewegung des Sperrglieds nach oben kommt das Sperrglied demzufolge mit der Rastaussparung in Kontakt und blockiert eine weitere Bewegung des Koppelschlittens. Gleichzeitig kommt das Sperrglied aus der Aufnahme in dem Antriebsschlitten frei. Das Sperrglied ist entweder in der Rastaussparung der Führungsschienenanordnung oder in der Aufnahme im Antriebsschlitten gefangen. Ein oberer Abschnitt des Sperrglieds ist demzufolge komplementär zu der Form der Rastaussparung ausgeführt, wohingegen ein unterer Abschnitt des Sperrglieds komplementär zu der Aufnahme im Antriebsschlitten gestaltet ist, um jeweils ein zumindest im Wesentlichen spielfreies Eintauchen des Sperrglieds in die Rastaussparung oder die Aufnahme im Antriebsschlitten zu ermöglichen.

In weiterer Ausgestaltung der Erfindung ist das Stützelement in Querrichtung der Führungsschienenanordnung beweglich gelagert. Damit ist das Stützelement quer zu einem Verfahrweg des Koppelschlittens beweglich. Das Stützelement ist demzufolge quer zu dem ebenfalls am Koppelschlitten angeordneten Sperrglied beweglich.

In weiterer Ausgestaltung der Erfindung ist das Stützelement als Blattfederschenkel gestaltet, der an dem Koppelschlitten derart elastisch beweglich eingespannt ist, dass der Blattfederschenkel in der Querrichtung der Führungsschienenanordnung schwenkbeweglich ist. Der Blattfederschenkel ist in Richtung der Stützstellung vorgespannt, in der der Blattfederschenkel das Sperrglied untergreifen kann, um es gegen ein Absenken nach unten zu stützen.

In weiterer Ausgestaltung der Erfindung weist der Antriebsschlitten ein Steuerglied auf, das das Stützelement bei einer Relativverlagerung zwischen Koppelschlitten und Antriebsschlitten aus der Stützstellung in die Lösestellung auslenkt. Das Steuerglied ist vorteilhaft ein Steuerschwert, das fest am Antriebsschlitten angeordnet ist und das Stützelement zur Seite drückt, sobald der Koppelschlitten und der Antriebsschlitten entsprechend aufeinander zubewegt werden.

In weiterer Ausgestaltung der Erfindung ist das Stützelement permanent in Richtung der Stützstellung federbelastet. Damit ist das Stützelement in unbelastetem Zustand zwangsläufig in seiner Stützstellung positioniert. Bei einer von außen wirkenden Zwangsführung kann das Stützelement gegen die Federkraft in die Lösestellung überführt werden. Zur Verlagerung des Stützelementes, insbesondere des Blattfederschenkels, aus der Stützstellung in die Lösestellung kann ein Zwangsführungselement des Antriebsschlittens vorgesehen sein, das abhängig von der Stellung des Antriebsschlittens das Stützelement, d. h. insbesondere den Blattfederschenkel, beaufschlagt oder freigibt. Die Schwenkbeweglichkeit des Blattfederschenkels erfolgt durch Biegung. Bei horizontaler Ausrichtung eines Bodens der Führungsschienenanordnung ist das Stützelement ebenfalls horizontal verlagerbar. Falls das Stützelement als Blattfederschenkel gestaltet ist, ist der Blattfederschenkel in horizontaler Querrichtung elastisch biegbar.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt in perspektivischer Darstellung eine Antriebsseite einer Ausführungsform eines erfindungsgemäßen Antriebssystems für einen beweglichen Dachteil eines Dachmoduls eines Personenkraftwagens in einer ersten Funktionsstellung,
- Fig. 2: das Antriebssystem nach Fig. 1 in einer zweiten Funktionsstellung,
- Fig. 3: das Antriebssystem nach Fig. 1 und 2 in einer weiteren Funktionsstellung,
- Fig. 4a: in perspektivischer Darstellung einen Ausschnitt des Antriebssystems nach den Fig. 1 bis 3,
- Fig. 4b: in vergrößerter perspektivischer Darstellung den Ausschnitt nach Fig. 4a,
- Fig. 5 bis 9: Längsschnittdarstellungen des Antriebssystems nach den Fig. 1 bis 4b in unterschiedlichen Funktionsstellungen eines Sperrglieds eines Koppelschlittens des Antriebssystems innerhalb einer Führungsschienenanordnung,
- Fig. 10 bis 13: ausschnittsweise Längsschnittdarstellungen des Antriebssystems nach den Fig. 1 bis 9 in einer anderen Längsschnittebene, ebenfalls in unterschiedlichen Funktionsstellungen des Sperrglieds,
- Fig. 14 bis 16: in einer ausschnittsweisen Längsschnittdarstellung einen vorderen Bereich des Antriebssystems mit einer frontseitigen Hubanordnung in unterschiedlichen Funktionsstellungen,
- Fig. 17 bis 21: in unterschiedlichen perspektivischen Teildarstellungen eine weitere Ausführungsform eines erfindungsgemäßen Antriebssystems ähnlich den Fig. 1 bis 16 und
- Fig. 22 bis 24: in ausschnittsweiser Längsschnittdarstellung das Antriebssystem nach den Fig. 17 bis 21 in unterschiedlichen Funktionsstellungen.

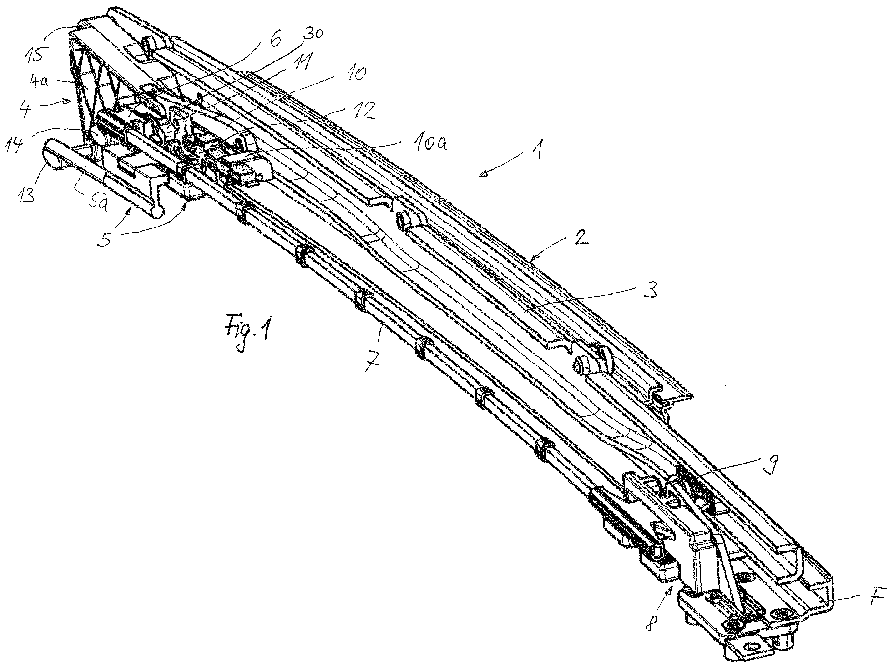

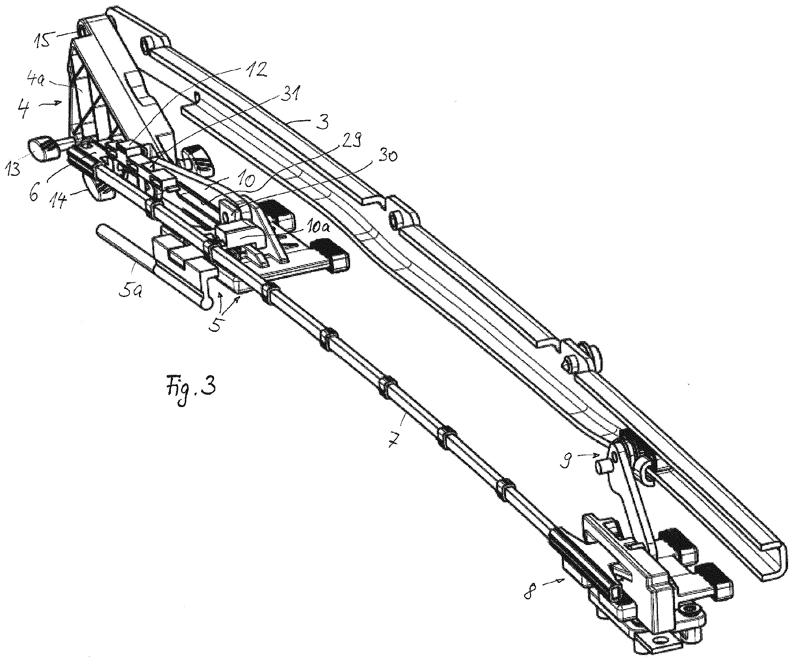

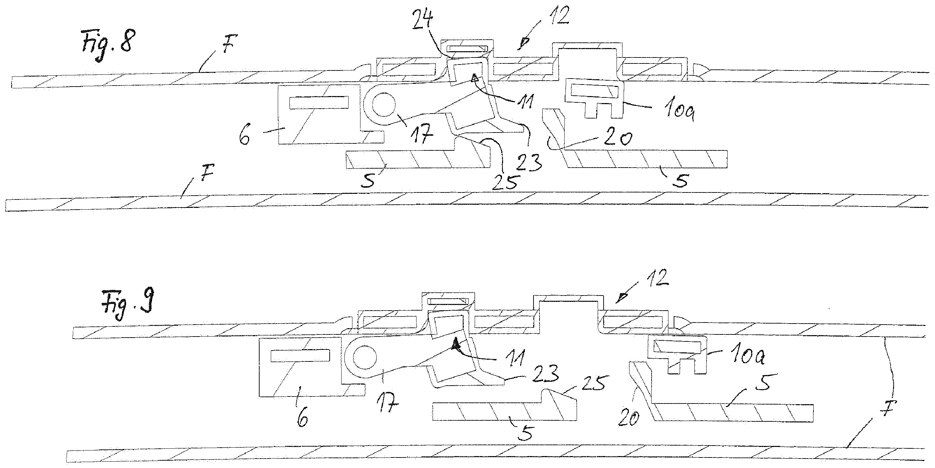

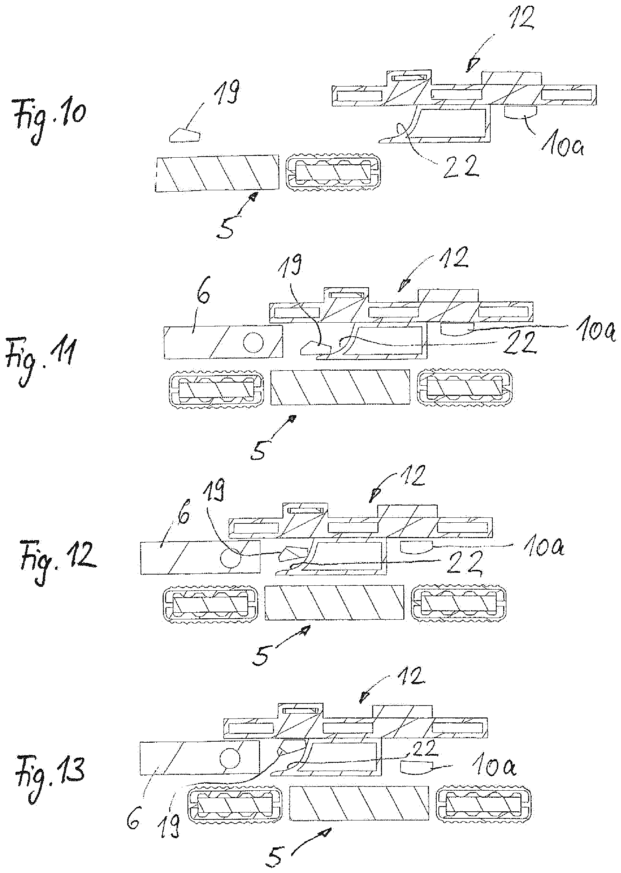

Ein Antriebssystem 1 nach den Fig. 1 bis 16 ist in einem Dachmodulrahmen 2 eines Dachmoduls eines Personenkraftwagens angeordnet, wobei der Dachmodulrahmen 2 gemäß Fig. 1 lediglich abschnittsweise über einen Teilbereich einer Länge des Dachmodulrahmens 2 dargestellt ist. Der Dachmodulrahmen 2 wird in grundsätzlich bekannter Weise in eine Dachaussparung des Personenkraftwagens eingesetzt. Das Dachmodul umfasst einen - in normaler Fahrtrichtung des Personenkraftwagens gesehen - vorderen Dachteil, der zwischen einer Schließstellung, einer Lüftungsstellung und einer Öffnungsstellung längs des Dachmodulrahmens verlagerbar angeordnet ist. Zudem umfasst das Dachmodul einen weiteren, ortsfest gehaltenen hinteren Dachteil, der fest mit dem Dachmodulrahmen verbunden ist. Der vordere, bewegliche Dachteil wird längs des Dachmodulrahmens 2 bei der Überführung in seine Öffnungsstellung über den feststehenden, hinteren Dachteil hinweg angehoben und nach hinten verfahren. In der Öffnungsstellung überlagert der bewegliche Dachteil den feststehenden Dachteil weitgehend in Fahrzeuglängsrichtung. Der bewegliche Dachteil verschließt in seiner Schließstellung einen Dachmodulausschnitt des Dachmodulrahmens 2. In seiner Öffnungsstellung gibt der bewegliche Dachteil diesen Dachmodulausschnitt frei, so dass ein Fahrzeuginnenraum des Personenkraftwagens in der Öffnungsstellung des beweglichen Dachteils durch den Dachmodulausschnitt hindurch nach oben hin offen ist. Das Dachmodul wird als zumindest weitgehend vormontierte Baueinheit bei der Herstellung des Personenkraftwagens dem Personenkraftwagen zugeführt und in die offene Dachaussparung des Fahrzeugdachs des Personenkraftwagens eingepasst.

Zur Verlagerung des beweglichen Dachteils aus der Schließstellung in die Lüftungsstellung und in die Öffnungsstellung sowie in umgekehrter Funktion bis zurück in die Schließstellung ist dem beweglichen Dachteil ein Antriebssystem 1 zugeordnet, das anhand der Fig. 1 bis 16 nachfolgend näher beschrieben wird. Das Antriebssystem 1 weist zwei spiegelsymmetrisch zueinander gestaltete, im Übrigen jedoch identisch ausgeführte Antriebsseiten auf, die über einen zentralen Elektromotor synchronisiert zueinander angetrieben werden und auf gegenüberliegenden Längsseiten des beweglichen Dachteils angeordnet sind. Anhand der Fig. 1 bis 16 ist lediglich die in Fahrtrichtung des Personenkraftwagens linke Antriebsseite des Antriebssystems 1 dargestellt. Die gegenüberliegende Antriebsseite ist bis auf die zuvor beschriebene Spiegelsymmetrie identisch aufgebaut.

Auf beiden Seiten längs des Dachmodulrahmens 2 ist jeweils eine Führungsschienenanordnung F vorgesehen. Anhand der Fig. 1 bis 16 ist die in Fahrtrichtung linke Führungsschienenanordnung F erkennbar. Der bewegliche Dachteil ist an seinen gegenüberliegenden Längsseiten an jeweils einem formstabilen Trägerprofil 3 befestigt, das über die jeweilige Antriebsseite des Antriebssystems 1 angehoben, abgesenkt und längs des Dachmodulrahmens 2 verlagerbar ist. Durch die synchrone Gestaltung und Ansteuerung der gegenüberliegenden Antriebsseiten erfolgt eine gewünschte Parallelverlagerung des beweglichen Dachteils. In der Schließstellung verschließt der bewegliche Dachteil den Dachmodulausschnitt dicht und ist mit seiner Oberseite bündig zu einer Oberseite des feststehenden Dachteils sowie zu einer Oberseite des Fahrzeugdachs ausgerichtet. In einer Lüftungsstellung ist der bewegliche Dachteil schräggestellt, indem sein hinterer Randbereich gegenüber einem vorderen Randbereich des feststehenden Dachteils nach oben ausgestellt ist. Für die Überführung des beweglichen Dachteils aus der Lüftungsstellung in die Öffnungsstellung wird auch der vordere Randbereich des beweglichen Dachteils angehoben, so dass der bewegliche Dachteil insgesamt über den feststehenden Dachteil hinweg nach hinten verfahren werden kann. Die Überführung in die Schließstellung erfolgt in umgekehrter Reihenfolge.

Zur Durchführung der entsprechenden Bewegungen des beweglichen Dachteils weist jede Antriebsseite des Antriebssystems 1 einen Antriebsschlitten 5 auf, der in der Führungsschienenanordnung F längsverfahrbar gelagert ist. Der Antriebsschlitten 5 wird durch ein Antriebsübertragungsmittel 5a in Form einer Flexwelle angetrieben. Das Antriebsübertragungsmittel 5a ist in einer entsprechenden Längsnut der Führungsschienenanordnung F längsverschiebbar gelagert. Das Antriebsübertragungsmittel 5a wird über ein Zahnradgetriebe durch einen Elektromotor angetrieben, der die zentrale Antriebseinheit für das Antriebssystem 1 bildet. Dieser Elektromotor treibt synchron auch das gegenüberliegende Antriebsübertragungsmittel und den gegenüberliegenden Antriebsschlitten an, die nicht dargestellt sind.

Das Antriebssystem 1 weist zudem für jede Antriebsseite eine Hubanordnung 4 auf, die frontseitig in der Führungsschienenanordnung F angeordnet ist und mit einem vorderen Stirnendbereich des Trägerprofils 3 verbunden ist. Hierzu weist die Hubanordnung 4 einen Gelenkpunkt 15 auf, an dem der vordere Stirnendbereich des Trägerprofils 3 angelenkt ist.

An einem hinteren Teil des Trägerprofils 3 greift zudem eine hintere Ausstellmechanik 8 an, die über ein Gleitgelenk 9 zum einen dazu vorgesehen ist, den hinteren Bereich des Trägerprofils 3 nach oben anzuheben, und zum anderen eine Führung für eine Längsverschiebung des Trägerprofils 3 nach hinten bildet. Von der hinteren Ausstellmechanik 8 ragt ein Koppelprofil 7 in Richtung zu der vorderen Hubanordnung 4 und zu dem Antriebsschlitten 5 nach vorne ab, das an seinem vorderen Stirnendbereich in einen Koppelschlitten 6 übergeht.

Sowohl der Antriebsschlitten 5 als auch der Koppelschlitten 6 sind in der Führungsschienenanordnung F längsverfahrbar gelagert. Der Koppelschlitten 6 ist - in Längsrichtung gesehen - vor dem Antriebsschlitten 5 angeordnet.

Die vordere Hubanordnung 4 weist einen Mehrpunkt-Stützkörper 4a auf, der im Wesentlichen dreieckförmig gestaltet ist und ein einteiliges Kunststoffbauteil mit einer Versteifungsrippung bildet. An einer vorderen, oberen Ecke des Mehrpunkt-Stützkörpers ist der Gelenkpunkt 15 für die Anlenkung des Trägerprofils 3 vorgesehen. Beabstandet zu dem oberen Gelenkpunkt 15 weist der Mehrpunkt-Stützkörper 4a zudem zwei Stützachsen 13, 14 auf, die mit Gleitkörpern versehen sind, um eine Gleitbeweglichkeit des Mehrpunkt-Stützkörpers 4a in der Führungsschienenanordnung F zu ermöglichen. An einem hinteren Eckbereich des Mehrpunkt-Stützkörpers 4a ist zudem ein Steuerhebel 10 schwenkbeweglich angelenkt, der eine längserstreckte Steuerkulisse 29 aufweist, die an ihrem hinteren Endbereich in einer Krümmung nach oben endet. An einem hinteren Stirnendbereich des Steuerhebels 10 ist ein Riegelelement 10a befestigt, das in Querrichtung zu dem Steuerhebel 10 abragt.

Der Antriebsschlitten 5 weist einen Schlittenkörper auf, der mithilfe von Gleitelementen in der Führungsschienenanordnung F längsverschiebbar geführt ist. Von dem Schlittenkörper ragt ein Führungsblock 30 aus nach oben ab, der mit einem Kulissenzapfen versehen ist, der in die Steuerkulisse 29 des Steuerhebels 10 hineinragt.

Der Koppelschlitten 6 ist mit einem schwenkbeweglichen Sperrglied 11 versehen, das mittels eines Schwenkarms 17 in dem Koppelschlitten 6 schwenkbeweglich gelagert ist.

Sowohl die Schwenkachse des Sperrglieds 11 als auch entsprechende Gelenkachsen der vorderen Hubanordnung 4 und der hinteren Ausstellmechanik 8 erstrecken sich parallel zueinander quer zur Längserstreckung der Führungsschienenanordnung F und damit in betriebsfertig montiertem Zustand des Dachmoduls in Fahrzeugquerrichtung.

Das Sperrglied 11 weist in einem oberen Bereich eine hammerförmige Kontur auf, die komplementär zu einer Rastaussparung 24 einer im Bereich einer Oberseite der Führungsschienenanordnung F ortsfest angeordneten Raststruktur 12 vorgesehen ist. Die Raststruktur 12 weist in Abstand hinter der Rastaussparung 24 zudem eine Sicherungsaufnahme 31 auf, die zur formschlüssigen Aufnahme des Riegelelements 10a des Steuerhebels 10 vorgesehen ist. Die Raststruktur 12 wird durch ein einteiliges Bauteil gebildet, das in eine obere Deckenwandung der Führungsschienenanordnung F eingebettet ist. Hierzu ist die obere Deckenwandung der Führungsschienenanordnung F mit einer komplementären Aussparung versehen, in die die Raststruktur 12 eingefügt ist.

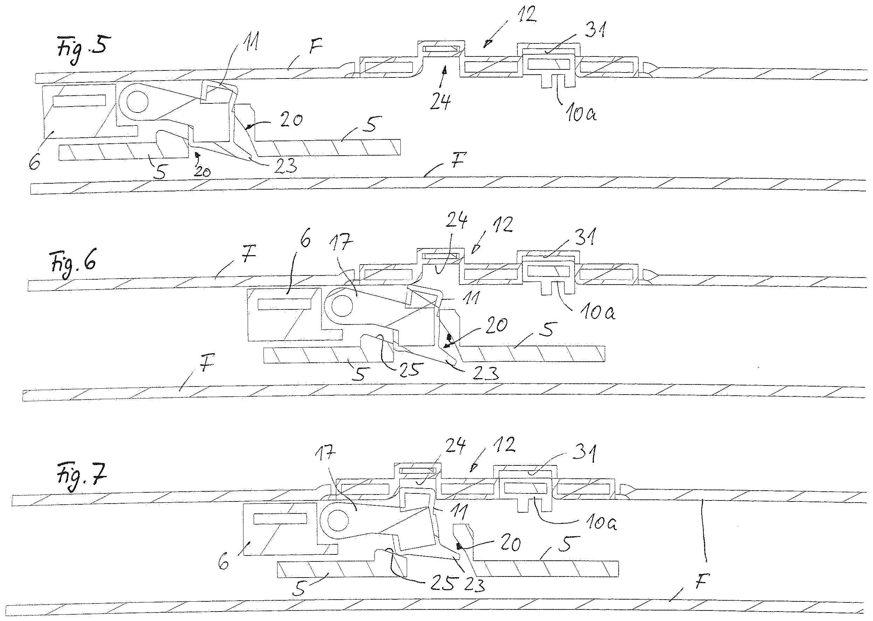

Das Sperrglied 11 weist im Bereich einer Unterseite eine Steuernase 23 auf, die entgegengesetzt zu dem Schwenkarm 17 nach hinten abragt. Im Bereich der Unterseite des Sperrglieds 11 weist das Sperrglied 11 zudem gegenüberliegend zu der Steuernase 23 eine nicht näher bezeichnete Stützkante auf, die eine Sicherung des unteren Bereichs des Sperrglieds 11 in einer Aufnahme 20 des Antriebsschlittens 5 gewährleistet (siehe Fig. 5 und 6). Die Aufnahme 20 des Antriebsschlittens 5 ist derart gestaltet, dass der untere Bereich des Sperrglieds 11 in die Aufnahme 20 eintauchen kann und formschlüssig in dieser gehalten ist. Eine Oberkante der Hammerkontur des Sperrglieds 11 gleitet in dem in der Aufnahme 20 des Antriebsschlittens 5 gefangenen Zustand des Sperrglieds 11 innenseitig an der Deckenwandung der Führungsschienenanordnung F entlang, so dass das Sperrglied 11 nach oben nicht ausweichen kann.

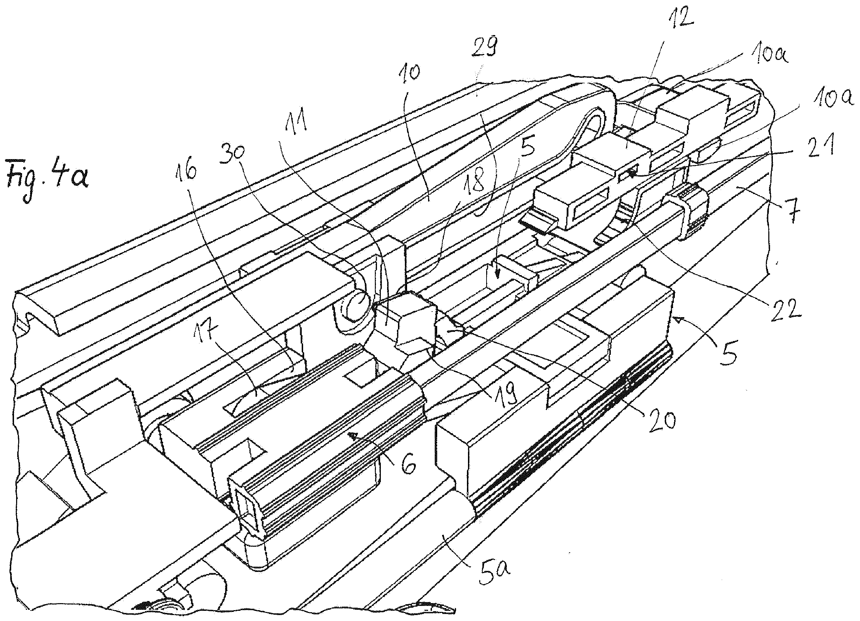

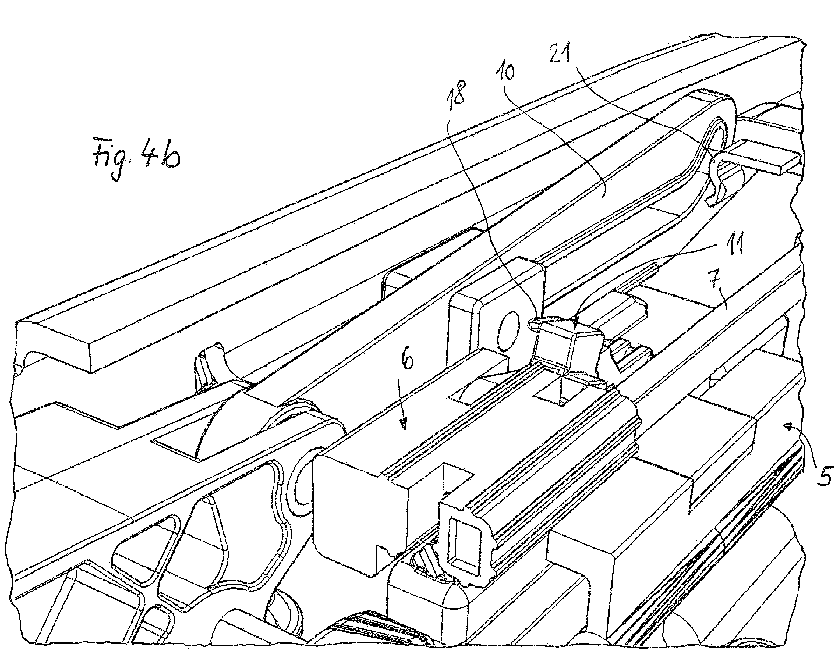

Die Hammerkontur des Sperrglieds 11 im oberen Bereich des Sperrglieds 11 ist zudem mit einer quer nach außen ragenden Rastnase 18 versehen, die mit einer S-förmig gekrümmten Rastfeder 21 innerhalb der Rastaussparung 24 der Raststruktur 12 zusammenwirkt. Die Rastfeder 21 wird durch eine Blattfeder gebildet, die einen in einen Schlitz der Raststruktur 12 eingesteckten Halteabschnitt sowie einen S-bogenförmig in die Rastaussparung 24 nach unten hineinragenden Federabschnitt aufweist. Anhand der Fig. 4b ist die freigeschnittene Rastfeder 21 erkennbar, die horizontal in den in Fig. 4a gezeigten Schlitz der Raststruktur 12 von der dem Steuerhebel 10 aus zugewandten Seite eingesteckt ist. In Fig. 4b ist zur besseren Übersichtlichkeit die Raststruktur 12 nicht dargestellt. Der Halteabschnitt der Rastfeder 21 wird in dem Schlitz der Raststruktur 12 klemmend gehalten. Der Federabschnitt der Rastfeder 21 ragt derart bogenförmig von einer Seite her in die Rastaussparung 24 hinein, dass der Federabschnitt mit der nockenartig vom Sperrglied 11 aus in Richtung des Steuerhebels 10 nach innen ragenden Rastnase 18 in Wirkverbindung kommt, sobald das Sperrglied 11 nach oben verschwenkt wird. Der Federabschnitt der Rastfeder 21 wird durch die Rastnase 18 elastisch nach außen gedrückt, bis die Rastnase 18 oberhalb des in die Rastaussparung 24 hineinragenden Bogenbereichs des Federabschnittes der Rastfeder 21 gefangen ist. Zur Verbesserung der Übersichtlichkeit sind in der Darstellung nach Fig. 4b lediglich wenige Teile und Abschnitte mit Bezugszeichen versehen, da die entsprechenden Bezugszeichen zwanglos auch der Fig. 4a entnommen werden können. Die Rastnase 18 in Verbindung mit der Rastfeder 21 gewährleistet, dass das Sperrglied 11 nach dem Eintauchen in die Rastaussparung 24 in dieser Rastaussparung 24 der Raststruktur 12 gefangen bleibt.

Das Sperrglied 11 weist zudem in Abstand unterhalb der Rastnase 18 einen ebenfalls quer nach außen ragenden Steuernocken 19 auf, der mit einer Steuerkontur 22 zusammenwirkt, die einstückig an der Raststruktur 12 angeformt ist und in die Bewegungsbahn des Sperrglieds 11 bzw. seines Steuernockens 19 hineinragt. Die Steuerkontur 22 dient dazu, das Sperrglied 11 aus der Aufnahme 20 im Antriebsschlitten 5 nach oben auszusteuern und in die ortsfeste Rastaussparung 24 der Raststruktur 12 hinein zwangszuführen.

Die Aufnahme 20 des Antriebsschlittens 5 weist, wie anhand der Fig. 5 bis 7 erkennbar ist, rückseitig in der Funktion einer Steuerkontur eine schräg nach vorne und oben erstreckte Wandung auf, die mit der Steuernase 23 des unteren Bereichs des Sperrglieds 11 zusammenwirken kann, um bei einer Längsbewegung des Antriebsschlittens 5 nach vorne aus einer nach hinten verfahrenen Stellung das Sperrglied 11 aus der Raststellung in der Rastaussparung 24 der Raststruktur 12 wieder herauszubewegen und in der Aufnahme 20 zu sichern. Die Aufnahme 20 weist zudem gegenüberliegend zu dem beschriebenen Wandungsabschnitt - ebenfalls in Funktion einer Steuerkontur - eine Anlaufschräge 25 auf, die bei einer Verfahrbewegung des Antriebsschlittens 5 nach hinten gemäß den Fig.5 bis 7 dazu dient, die Hammerkontur des Sperrglieds 11 in die Rastaussparung 24 der Raststruktur 12 hineinzudrücken. Die Anlaufschräge 25 unterstützt die Steuerkontur 22, die über den Steuernocken 19 ebenfalls ein entsprechendes Drehmoment nach oben auf das Sperrglied 11 ausüben kann.

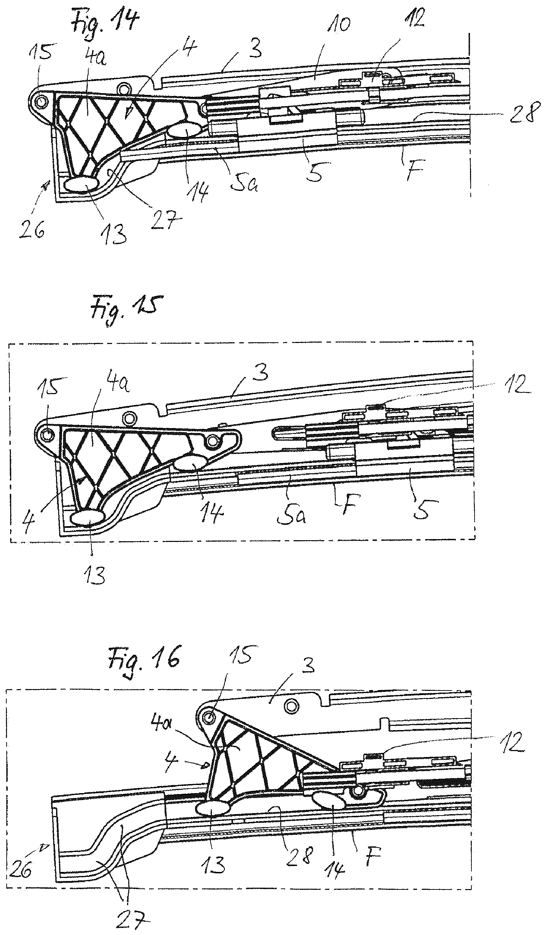

Die Führungsschienenanordnung F weist eine Schienenfläche 28 auf (Fig. 14 bis 16), längs der der Antriebsschlitten 5 entlanggleitet. An einem vorderen Stirnendbereich ist die Führungsschienenanordnung F mit einem Krümmungsabschnitt 26 versehen, der eine Kurvenführungsbahn 27 bildet, die die Schienenfläche 28 nach vorne hin in einem Bogen nach unten sowie in einem entgegengerichteten Krümmungsbogen auf ein gegenüber der Schienenfläche 28 niedrigeres Höhenniveau führt. Der Krümmungsabschnitt 26 bildet ein separates Kunststoffbauteil, das frontseitig an ein die Schienenfläche 28 umfassendes Führungsschienenprofil angefügt ist. In diesem frontseitigen Krümmungsabschnitt 26 ist die Stützachse 13 des Mehrpunkt-Stützkörpers 4a positioniert, solange das Trägerprofil 3 sich in der Schließstellung oder der Lüftungsstellung des beweglichen Dachteils befindet. In dieser Stellung ist zwangsläufig nicht nur die Stützachse 13, sondern auch der Gelenkpunkt 15 gegenüber der durch die Schienenfläche 28 definierten Führungsfläche abgesenkt. Sobald die Hubanordnung 4 mit dem Mehrpunkt-Stützkörper 4a gemäß Fig. 16 nach hinten verlagert wird, wird die Stützachse 13 innerhalb der Kurvenkontur 27 nach oben verlagert und gleitet längs der Schienenfläche 28 der Führungsschienenanordnung F entlang. Die Stützachsen 13, 14 befinden sich nun in einer gemeinsamen Ebene. Dadurch wird zwangsläufig der Mehrpunkt-Stützkörper 4a schräg nach oben angestellt, wodurch der Gelenkpunkt 15 nach oben verlagert wird. Damit wird zwangsläufig auch der vordere Stirnendbereich des Trägerprofils 3 nach oben verlagert, wodurch der Dachteil auch im Bereich seiner vorderen Stirnkante angehoben wird.

Die hintere Ausstellmechanik 8 weist einen Steuerschlitten auf, an dem das Koppelprofil 7 fest angeordnet ist. Der Steuerschlitten ist gegenüber einer Schwenkkinematik der Ausstellmechanik 8 in der Führungsschienenanordnung F verschiebbar gelagert, wodurch eine gewünschte Ausstellung oder Absenkung des hinteren Bereichs des Trägerprofils 3 mittels des Gleitgelenks 9 erfolgt.

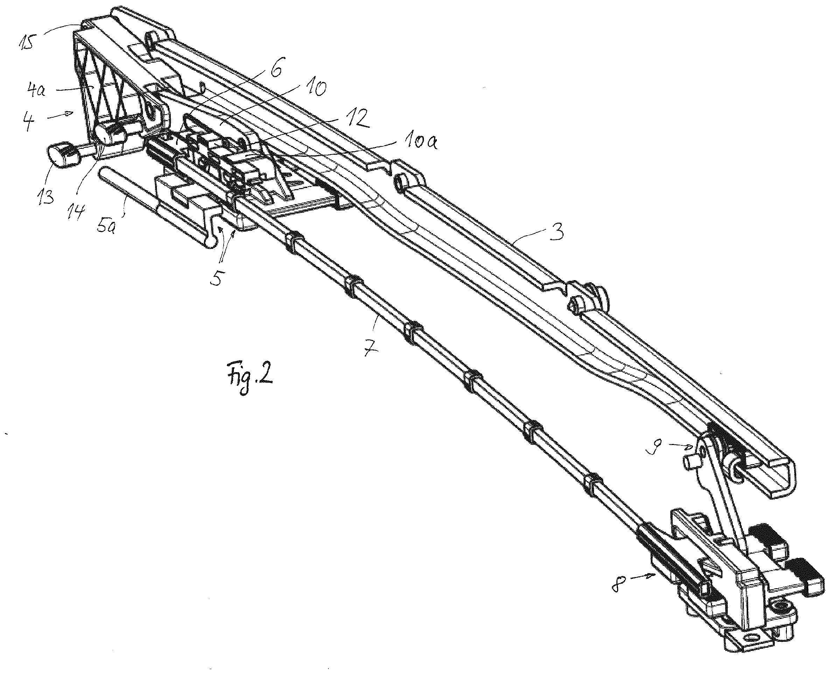

Das Ausstellen des hinteren Bereichs des Trägerprofils 3, das eine Überführung des Dachteils aus der Schließstellung in die Lüftungsstellung bewirkt, erfolgt dadurch, dass der Antriebsschlitten 5 ausgehend von der Schließstellung des Antriebssystems 1 (Fig. 1) längs der Führungsschienenanordnung F nach hinten verfahren wird. Da der Koppelschlitten 6 über das Sperrglied 11 in der Aufnahme 20 des Antriebsschlittens 5 formschlüssig aufgenommen ist, wird auch der Steuerschlitten der hinteren Ausstellmechanik 8 über das Koppelprofil 7 nach hinten verschoben. Hierdurch stellt das Gleitgelenk 9 sich nach oben aus (Fig. 2). Während dieser Verfahrbewegung des Antriebsschlittens 5 gleitet der Kulissenzapfen des Führungsblocks 30 des Antriebsschlittens 5 in der Steuerkulisse 29 des Steuerhebels 10 entlang. Sobald der Kulissenzapfen des Führungsblocks 30 den nach oben gekrümmten hinteren Endbereich der Steuerkulisse 29 erreicht hat, taucht der Steuerhebel 10 nach unten ab, wodurch das Riegelelement 10a aus der Sperraufnahme 31 in der Raststruktur 12 freikommt. Über den Führungsblock 30 wird der Steuerhebel 10 weiter in Längsrichtung nach hinten mitgenommen, solange der Antriebsschlitten 5 weiter nach hinten verfahren wird. Ein vorderer Gelenkpunkt des Steuerhebels 10, der an dem Mehrpunkt-Stützkörper 4a angelenkt ist, zieht zwangsläufig den Mehrpunkt-Stützkörper 4a mit nach hinten, wodurch der Mehrpunkt-Stützkörper 4a aus dem frontseitigen Krümmungsabschnitt 26 der Führungsschienenanordnung F freikommt und sich schräg nach oben aufstellt. Nun ist das Trägerprofil 3 sowohl in seinem vorderen Endbereich als auch in seinem hinteren Endbereich über das Niveau des feststehenden Dachteils angehoben, so dass bei einer weiteren Verlagerungsbewegung des Antriebsschlittens 5 nach hinten das Trägerprofil 3 und damit der bewegliche Dachteil in die Öffnungsstellung nach hinten verfahren wird. Dabei gleitet das Trägerprofil 3 an einem entsprechenden Gleitstein des Gleitgelenks 9 entlang, während die hintere Ausstellmechanik 8 in der ausgestellten Funktionsstellung des Gleitgelenks 9 verbleibt.

Bei der Überführung des Steuerhebels 10 und des Riegelelements 10a in die Freigabestellung nach unten wird gleichzeitig das Sperrglied 11 aus der Aufnahme 20 im Antriebsschlitten 5 nach oben ausgesteuert und in der Rastaussparung 24 gesichert, so dass der Koppelschlitten 6 in einer ortsfesten Stellung relativ zur Führungsschienenanordnung F verbleibt. Hierdurch verbleibt zwangsläufig auch der Steuerschlitten der hinteren Ausstellmechanik 8 in der entsprechenden Verfahrposition, die der ausgestellten Funktionsstellung des Gleitgelenks 9 entspricht.

Bei einer Rückführung des Trägerprofils 3 in Richtung der Schließstellung laufen die entsprechenden Bewegungsvorgänge in umgekehrter Richtung ab, wodurch das Riegelelement 10a wieder in die Sperraufnahme 31 der Raststruktur 12 eingesteuert und gleichzeitig das Sperrglied 11 aus der Rastaussparung 24 ausgesteuert und wieder in die formschlüssige Sicherungsstellung innerhalb der Aufnahme 20 des Antriebsschlittens 5 eingesteuert wird.

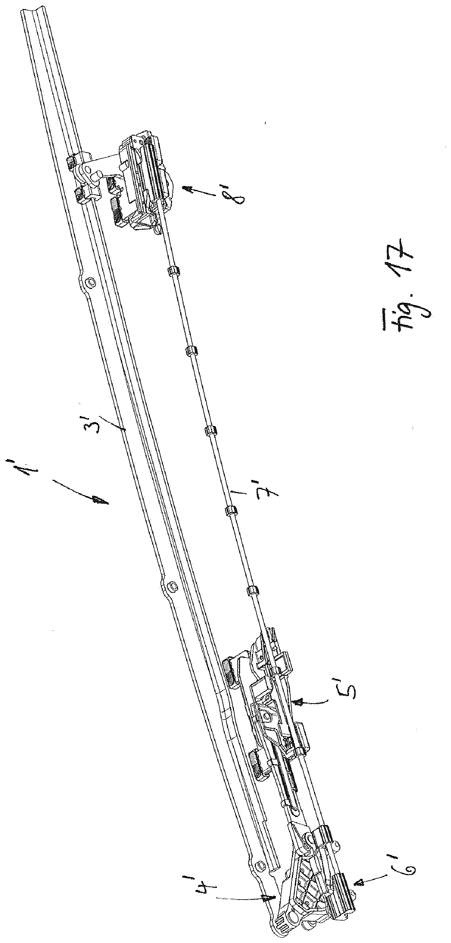

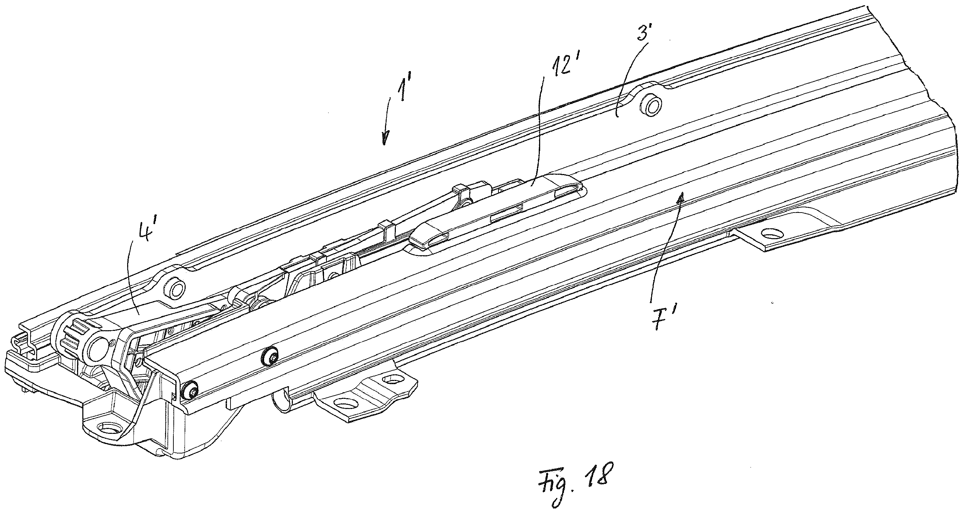

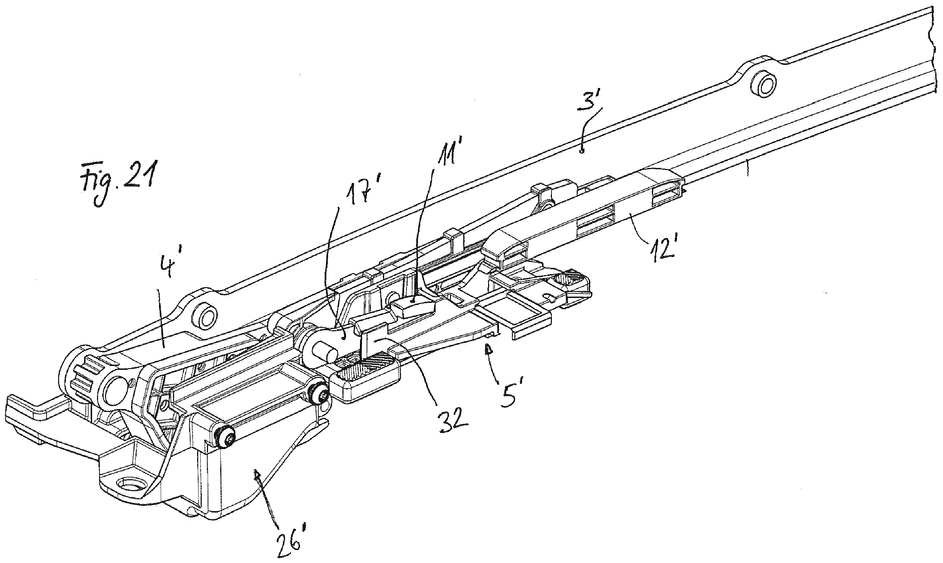

Das Antriebssystem 1' nach den Fig. 17 bis 24 entspricht im Wesentlichen dem Antriebssystem 1, wie es anhand der Fig. 1 bis 16 zuvor beschrieben wurde. Funktionsgleiche Teile und Abschnitte des Antriebssystems 1' sind daher mit gleichen Bezugszeichen unter Hinzufügung eines Hochstrichs versehen. Zur Vermeidung von Wiederholungen wird für die Ausführungsform nach den Fig. 17 bis 24 ergänzend auf die Offenbarung zu dem Antriebssystem nach den Fig. 1 bis 16 verwiesen. Nachfolgend wird daher vorwiegend auf die Unterschiede des Antriebssystems 1' nach den Fig. 17 bis 24 eingegangen.

Das Antriebssystem 1' weist einen Koppelschlitten 6' auf, der über ein längserstrecktes Koppelprofil 7' mit einer hinteren Ausstellmechanik 8' verbunden ist. Die entsprechende Antriebsseite des Antriebssystems 1' ist in einer Führungsschienenanordnung F' analog der Antriebsseite des Antriebssystems 1 nach den Fig. 1 bis 16 verfahrbar. Ein Trägerprofil 3' eines entsprechenden beweglichen Dachteiles ist mittels der vorderen Hubanordnung 4' und der hinteren Ausstellmechanik 8' in die unterschiedlichen Stellungen verlagerbar. Der Antriebsschlitten 5' ist dazu vorgesehen, in der Führungsschienenanordnung F' verfahren zu werden und hierdurch eine entsprechende Steuerung der vorderen Hubanordnung 4' und der hinteren Ausstellmechanik 8' zu bewirken.

Der Koppelschlitten 6', der die gleiche Funktion aufweist wie der Koppelschlitten 6 gemäß der Ausführungsform nach den Fig. 1 bis 16, weist ein Sperrglied 11' auf, das mittels eines Schwenkarms 17' in dem Koppelschlitten 6' um eine in Querrichtung der Führungsschienenanordnung F' erstreckte Schwenkachse schwenkbeweglich gelagert ist. Das Sperrglied 11' ist demzufolge im Wesentlichen in Hochrichtung der Führungsschienenanordnung nach oben und nach unten schwenkbeweglich. Der Antriebsschlitten 5' wie auch der Koppelschlitten 6' sind in Längsrichtung der Führungsschienenanordnung F' verfahrbar.

Analog des Antriebssystems 1 nach den Fig. 1 bis 16 ist auch der Führungsschienenanordnung F' eine im Bereich einer Oberseite der Führungsschienenanordnung F' ortsfest angeordnete Raststruktur 12' zugeordnet. In der Raststruktur 12 ist eine nach unten offene Rastaussparung 24' vorgesehen, die für die Aufnahme einer hammerförmigen Kontur des Sperrglieds 11 vorgesehen ist. Das Sperrglied 11' weist im Bereich seiner Unterseite, d. h. im Wesentlichen gegenüberliegend zu der hammerförmigen Kontur, eine Steuernase 23' auf, die analog zu dem Antriebsschlitten 5 gemäß den Fig. 1 bis 16 mit einer Aufnahme 20' des Antriebsschlittens 5' zusammenwirkt. Der Antriebsschlitten 5' weist auch eine Anlaufschräge 25' auf, deren Funktion der Anlaufschräge 25 des Antriebssystems 1 nach den Fig. 1 bis 16 entspricht.

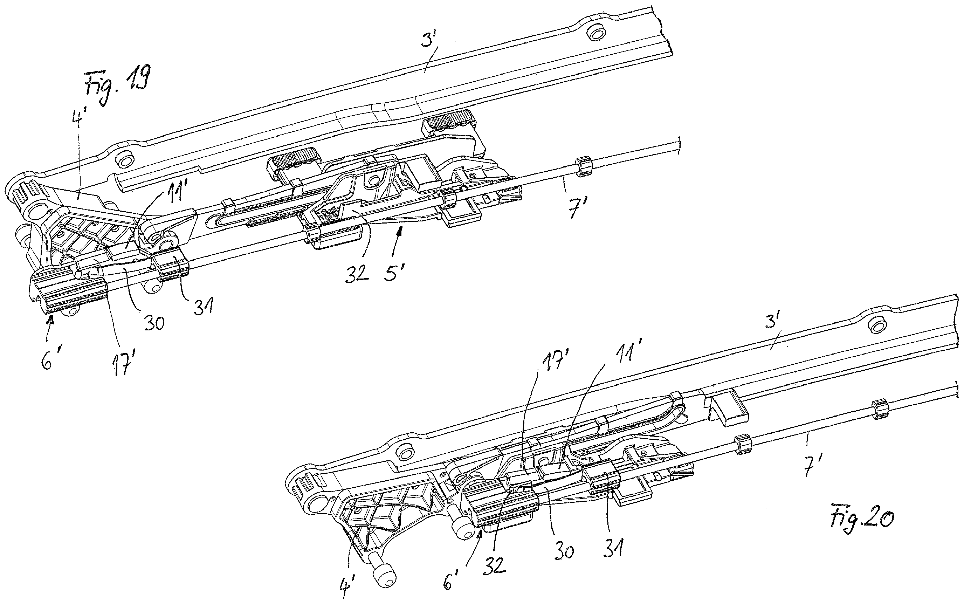

Wesentlicher Unterschied bei der Ausführungsform nach den Fig. 17 bis 24 ist es, dass das Sperrglied 11' in der oberen Sperrstellung (siehe Fig. 19) durch ein Stützelement 30 gehalten ist, das am Koppelschlitten 6' angebracht ist. Hierzu weist der Koppelschlitten 6' ein auf dem Koppelprofil 7' befestigtes Koppelglied 31 auf, das zu einem nicht näher bezeichneten Führungskörper des Koppelschlittens 6' nach hinten beabstandet positioniert ist. Das Stützelement 30 ist als Blattfederschenkel gestaltet, der in dem Koppelglied 31 eingespannt ist und zu dem Führungskörper des Koppelschlittens 6' hin abragt. Der Blattfederschenkel ragt relativ zum Koppelprofil 7' in Querrichtung seitlich nach innen ab und weist einen freien Endabschnitt auf, der in der Darstellung gemäß Fig. 19 einen Stützabschnitt des Schwenkarmes 17' des Sperrgliedes 11' in Hochrichtung formschlüssig untergreift. Der Blattfederschenkel 30 ist in Querrichtung nach innen, d. h. zu der vorderen Hubanordnung 4' hin permanent federbelastet.

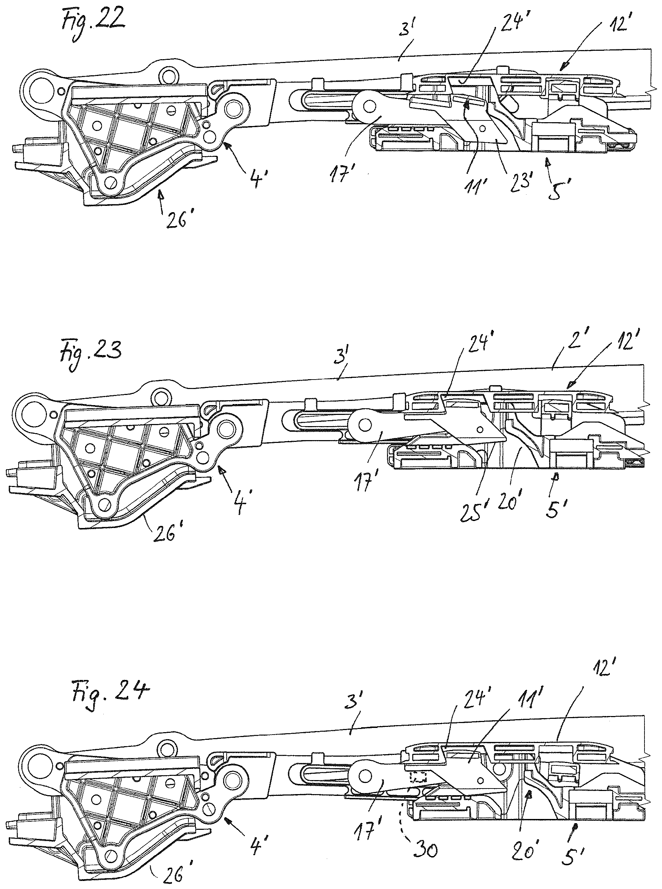

Der Antriebsschlitten 5' weist ein hochkant ausgerichtetes Steuerschwert (Steuerglied) 32 auf, das einstückig am Antriebsschlitten 5' angeformt ist und in Längsrichtung der Führungsschienenanordnung ausgerichtet ist. Das Steuerschwert 32 ist derart positioniert, dass es bei einer Relativverlagerung in Längsrichtung der Führungsschienenanordnung F' von Antriebsschlitten 5' und Koppelschlitten 6' relativ zueinander zwischen das Sperrglied 11' und das Koppelglied 31 eintauchen kann, wodurch das Steuerschwert 32 zwangsläufig den quer nach innen gebogenen und federbelasteten Blattfederschenkel des Stützelementes 30 zur Seite nach außen drängt (siehe Fig. 20). Dadurch wird der den Schwenkarm 17' des Sperrgliedes 11' stützende Endabschnitt des Blattfederschenkels in Querrichtung nach außen gedrängt, wodurch der Endabschnitt zwangsläufig den Schwenkarm 17' des Sperrgliedes 11' freigibt. Das Sperrglied 11' kann demzufolge durch sein Eigengewicht nach unten fallen. Die Anordnung des Steuerschwertes 32 und die Aufnahme 20' des Antriebsschlittens 5' sind derart positioniert, dass das Sperrglied 11' in gleicher Weise nach oben und nach unten verschwenkt wird, wie dies bei der Ausführungsform nach den Fig. 1 bis 16 der Fall war. Sobald daher eine Verlagerung des Antriebsschlittens 5' relativ zu der Raststruktur 12' das Sperrglied 11' zwangsläufig in die Rastaussparung 24' nach oben hineindrückt, gibt das Steuerschwert 32 das Stützelement 30, d. h. den Blattfederschenkel, wieder frei, wodurch dieser hier den Stützarm 17' untergreift und das Sperrglied 11' gemäß Fig. 24 in der Raststellung innerhalb der Raststruktur 12' sichert.

Sobald der Antriebsschlitten 5' aus einer nach hinten verlagerten Funktionsstellung wieder in Richtung der vorderen Hubanordnung 4' verfährt, kann das Steuerschwert 32 den Blattfederschenkel wieder quer nach außen drängen, wodurch eine Unterkante des Sperrgliedes 11' zunächst auf einer entsprechenden Oberfläche des Antriebsschlittens 5' aufliegt, bis der Antriebsschlitten 5' so weit nach vorne verfahren ist, dass das Sperrglied 11' wieder in die Aufnahme 20' des Antriebsschlittens 5' nach unten eintauchen kann und so gemäß Fig. 22 die hammerförmige Kontur des Sperrgliedes 11' wieder aus der Rastaussparung 24' der ortsfesten Raststruktur 12' frei kommt.

## Patentansprüche

1. Antriebssystem für einen beweglichen Dachteil eines Dachmoduls eines Kraftfahrzeugs mit einer in betriebsfertig montiertem Zustand dachmodulfest montierten Führungsschienenanordnung (F, F'), mit einem Antriebsschlitten (5, 5'), der über Antriebsübertragungsmittel (5a) längs der Führungsschienenanordnung (F, F') längsverfahrbar ist, mit einer frontseitigen Hubanordnung (4, 4') sowie mit einer rückseitigen Ausstellmechanik (8, 8') und mit einem Trägerprofil (3, 3'), an dem der Dachteil in betriebsfertig montiertem Zustand befestigt ist, wobei die Hubanordnung (4) und die Ausstellmechanik (8) derart mit dem Trägerprofil (3) zusammenwirken, wobei das Trägerprofil (3) zwischen einer Schließstellung des Dachteils, einer Lüftungsstellung und einer Öffnungsstellung des Dachteils zwangsgeführt ist, und mit einer Koppeleinrichtung (6, 6', 11, 11'), die eine wegbegrenzte Wirkverbindung zwischen der rückseitigen Ausstellmechanik (8, 8') und dem Antriebsschlitten (5, 5') herstellt, wobei die Koppeleinrichtung an ihrem zu der Ausstellmechanik (8, 8') abliegenden Endbereich einen in der Führungsschienenanordnung (F, F') geführten Koppelschlitten (6, 6') aufweist, der ein in Hochrichtung bewegliches Sperrglied (11, 11') umfasst, wobei in der Führungsschienenanordnung (F, F') eine ortsfeste Rastaussparung (24, 24') vorgesehen ist, und wobei der Antriebsschlitten (5, 5') eine Aufnahme (20, 20') aufweist, wobei das Sperrglied (11, 11') durch mechanische Steuerkonturen (20, 20', 25, 25'; 19, 22) abhängig von einer Stellung des Antriebsschlittens (5, 5') in die Rastaussparung (24, 24') oder in die Aufnahme (20, 20') hinein zwangsgesteuert ist, **dadurch gekennzeichnet, dass** an dem Koppelschlitten (6') ein Stützelement (30) angebracht ist, das zwischen einer das Sperrglied (11') in einer Raststellung sichernden Stützstellung und einer das Sperrglied (11') für ein Absenken nach unten freigebenden Lösestellung beweglich gelagert ist..

2. Antriebssystem nach Anspruch 1, **dadurch gekennzeichnet, dass** das Sperrglied (11, 11') an dem Koppelschlitten (6, 6') schwenkbeweglich gelagert ist.

3. Antriebssystem nach Anspruch 1 oder 2, **dadurch gekennzeichnet, dass** das Sperrglied (11, 11') auf einer Seite eine zu der Rastaussparung (24, 24') komplementäre Kontur und auf einer gegenüberliegenden Seite eine auf die Aufnahme (20, 20') im Antriebsschlitten (5, 5') abgestimmte Aufnahmekontur aufweist.

4. Antriebssystem nach Anspruch 1, **dadurch gekennzeichnet, dass** das Stützelement (30) permanent in Richtung der Stützstellung federbelastet ist.

5. Antriebssystem nach Anspruch 1 oder 4, **dadurch gekennzeichnet, dass** das Stützelement (30) in Querrichtung der Führungsschienenanordnung (F') beweglich gelagert ist.

6. Antriebssystem nach einem der Ansprüche 1 und 4, 5, **dadurch gekennzeichnet, dass** der Antriebsschlitten (5') ein Steuerglied (32) aufweist, das das Stützelement (30) bei einer Relatiwerlagerung zwischen Koppelschlitten (6') und Antriebsschlitten (5') aus der Stützstellung in die Lösestellung auslenkt.

7. Antriebssystem nach einem der Ansprüche 1 und 4 bis 6, **dadurch gekennzeichnet, dass** das Stützelement (30) als Blattfederschenkel gestaltet ist, der an dem Koppelschlitten (6') derart elastisch beweglich eingespannt ist, dass der Blattfederschenkel in der Querrichtung der Führungsschienenanordnung (F') schwenkbeweglich ist.

8. Antriebssystem nach einem der Ansprüche 1 und 4 bis 7, **dadurch gekennzeichnet, dass** das Stützelement (30) das Sperrglied (11') in der Raststellung von unten her in Hochrichtung stützt und für eine Überführung in die Lösestellung zu einer Seite hin wegschwenkt.

## Claims

1. Drive system for a movable roof part of a roof module of a motor vehicle, comprising a guide rail arrangement (F, F') installed fixed to the roof module in the ready-for-use assembled condition, comprising a drive slide (5, 5') which is lengthwise displaceable along the guide rail arrangement (F, F') via drive transmission means (5a), comprising a front-side lifting arrangement (4, 4') and a rear-side deployment mechanism (8, 8'), and comprising a support profile (3, 3') on which the roof part is fixed in the ready-for-use assembled condition, wherein the lifting arrangement (4) and the deployment mechanism (8) interact with the support profile (3) in such a manner that the support profile (3) is forcedly guided between a closed position of the roof part, a ventilation position and an open position of the roof part, and comprising a coupling device (6, 6', 11, 11') to produce a distance-controlled operative connection between the rear-side deployment mechanism (8, 8') and the drive slide (5, 5'), wherein the coupling device, on the terminal portion thereof remote from the deployment mechanism (8, 8'), includes a coupling slide (6, 6') guided in the guide rail arrangement (F, F'), which slide comprises a blocking member (11, 11') movable in the vertical direction, wherein a latching recess (24, 24') fixed in location is provided within the guide rail arrangement (F, F'), and wherein the drive slide (5, 5') has a seat (20, 20'), wherein the blocking member (11, 11') is forcedly controlled into the latching recess (24, 24') or into the seat (20, 20') by mechanical control contours (20, 20', 25, 25'; 19, 22) as a function of a position of the drive slide (5, 5'),
**characterized in that**
a support element (30) is attached to the coupling slide (6'), which support element is mounted to be movable between a support position securing the blocking member (11') in a latching position and a release position releasing the blocking member (11') for a downwards lowering move.

2. Drive system according to claim 1, **characterized in that** the blocking member (11, 11') is pivotably mounted on the coupling slide (6, 6').

3. Drive system according to claim 1 or 2, **characterized in that** the blocking member (11, 11') has on one side a contour complementary to the latching recess (24, 24') and on an opposite side a seat contour matched to the seat (20, 20') in the drive slide (5, 5').

4. Drive system according to claim 1, **characterized in that** the support element (30) is permanently spring-loaded in the direction towards the support position.

5. Drive system according to claim 1 or 4, **characterized in that** the support element (30) is mounted to be movable in the transverse direction of the guide rail arrangement (F').

6. Drive system according to any of claims 1 and 4, 5, **characterized in that** the drive slide (5') includes a control member (32) which directs the support element (30) during a relative displacement between coupling slide (6') and drive slide (5') from the support position to the release position.

7. Drive system according to any of claims 1 and 4 to 6, **characterized in that** the support element (30) is embodied in a leaf spring leg which is clamped on the coupling slide (6') elastically movable such that the leaf spring leg is pivotable in the transverse direction of the guide rail arrangement (F').

8. Drive system according to any of claims 1 and 4 to 7, **characterized in that** the support element (30) supports the blocking member (11') in the latching position from below towards the vertical direction and pivots it away towards one side for a transfer to the release position.

## Revendications

1. Système d'entraînement pour une pièce de toit mobile d'un module de toit d'un véhicule automobile avec un arrangement de rail de guidage (F, F') monté fixement sur le module de toit dans l'état assemblé prêt à l'emploi, avec un chariot d'entraînement (5, 5') qui est déplaçable longitudinalement le long de l'arrangement de rail de guidage (F, F') par le biais de moyens de transmission (5a), avec un arrangement de levage (4, 4') côté frontal ainsi qu'avec un mécanisme de déploiement (8, 8') côté arrière et avec un profil de support (3, 3') sur lequel la pièce de toit est fixée dans l'état assemblé prêt à l'emploi, dans lequel l'arrangement de levage (4) et le mécanisme de déploiement (8) coopèrent avec le profil de support (3) de telle manière que le profil de support (3) est guidé forcément entre une position fermée de la pièce de toit, une position de ventilation et une position ouverte de la pièce de toit, et avec un dispositif de couplage (6, 6', 11, 11') pour établir une liaison active limitée de course entre le mécanisme de déploiement (8, 8') côté arrière et le chariot d'entraînement (5, 5'), dans lequel le dispositif de couplage comprend, sur sa zone d'extrémité éloignée du mécanisme de déploiement (8, 8'), un chariot de couplage (6, 6') guidé dans l'arrangement de rail de guidage (F, F'), ledit chariot de couplage comportant un élément de blocage (11, 11') mobile dans la direction verticale, dans lequel un évidement d'encliquetage (24, 24') fixe est prévu dans l'arrangement de rail de guidage (F, F'), et dans lequel le chariot d'entraînement (5, 5') présente un siège (20, 20'), dans lequel l'élément de blocage (11, 11') plonge dans l'évidement d'encliquetage (24, 24') ou dans le siège (20, 20') à commande forcée par des contours de commande (20, 20', 25, 25' ; 19, 22) mécaniques en fonction d'une position du chariot d'entraînement (5, 5'),
**caractérisé en ce que**
sur le chariot de couplage (6') un élément de support (30) est attaché, ledit élément de support est monté pour être mobile entre une position de support retenant l'élément de blocage (11') dans une position d'encliquetage et une position de relâchement libérant l'élément de blocage (11') pour un abaissement vers le bas.

2. Système d'entraînement selon la revendication 1, **caractérisé en ce que** l'élément de blocage (11, 11') est monté à pivotement sur le chariot de couplage (6, 6').

3. Système d'entraînement selon la revendication 1 ou 2, **caractérisé en ce que** l'élément de blocage (11, 11') présente sur un côté un contour complémentaire à l'évidement d'encliquetage (24, 24') et sur un côté opposé un contour de siège adapté au siège (20, 20') dans le chariot d'entraînement (5, 5').

4. Système d'entraînement selon la revendication 1, **caractérisé en ce que** l'élément de support (30) est chargé à ressort en permanence dans la direction vers la position de support.

5. Système d'entraînement selon la revendication 1 ou 4, **caractérisé en ce que** l'élément de support (30) est monté de façon mobile dans la direction transversale de l'arrangement de rail de guidage (F').

6. Système d'entraînement selon l'une quelconque des revendications 1 et 4, 5, **caractérisé en ce que** le chariot d'entraînement (5') présente un élément de commande (32) qui dirige l'élément de support (30), pendant un déplacement relatif entre chariot de couplage (6') et chariot d'entraînement (5'), de la position de support à la position de relâchement.

7. Système d'entraînement selon l'une quelconque des revendications 1 et 4 à 6, **caractérisé en ce que** l'élément de support (30) est agencé sous forme de jambe de ressort à lame, ladite jambe étant serrée sur le chariot de couplage (6') élastiquement mobile de telle manière que la jambe de ressort à lame est pivotante dans la direction transversale de l'arrangement de rail de guidage (F').

8. Système d'entraînement selon l'une quelconque des revendications 1 et 4 à 7, **caractérisé en ce que** l'élément de support (30) supporte l'élément de blocage (11') dans la position d'encliquetage du bas vers la direction verticale et le fait pivoter vers un côté pour un transfert à la position de relâchement.
